# FASCICULE DE BREVET EUROPEEN

(11) **EP 0 960 050 B1**
(45) Date de publication et mention de la délivrance du brevet: **16.07.2003**
(21) Numéro de dépôt: 98958305.9
(22) Date de dépôt: 02.12.1998
(51) Int. Cl.: B64D 29/08, B64C 7/02

(54) **DISPOSITIF D'OUVERTURE COMMUN A DEUX CAPOTS ADJACENTS DE NACELLE DE MOTEUR D'AVION**
GEMEINSAME ÖFFNUNGSVORRICHTUNG FÜR ZWEI BENACHBARTE HAUBEN EINER FLUGZEUGSANTRIEBSGONDEL
OPENING DEVICE FOR TWO ADJACENT COWLS OF AN AIRCRAFT ENGINE BAY

(30) Priorité: 03.12.1997 FR 9715226
(43) Date de publication de la demande: 01.12.1999
(73) Titulaire: AIRBUS France, 31060 Toulouse Cedex 03 (FR)
(72) Inventeur: PORTE, Alain, F-31770 COLOMIERS (FR)
(74) Mandataire: Ilgart, Jean-Christophe
(86) Numéro de dépôt international: FR9802596
(87) Numéro de publication internationale: WO99028188

(56) Documents cités:
- EP-A- 0 393 259
- US-A- 4 399 966
- US-A- 4 440 068

## Description

Cette invention concerne un dispositif commun d'ouverture de deux capots adjacents de nacelle de moteur d'avion.

Les moteurs d'avion sont enveloppés dans des nacelles dont certaines parties sont des capots mobiles pouvant s'ouvrir pour qu'on puisse accéder au moteur.

De façon classique, ces capots ont des sections transversales en arc de cercle, sont articulés à un mât solidaire de la voilure ou à un élément fixe de la nacelle par leur bord supérieur et sont munis de moyens de verrouillage à leur bord inférieur afin de les maintenir normalement fermés. Le procédé d'ouverture des capots consiste à défaire les moyens de verrouillage avant de soulever les capots et de les maintenir en position ouverte en disposant des bielles, souvent télescopiques, d'espacement entre les capots et le moteur que la nacelle enveloppe.

Les capots sont soulevés à la main s'ils sont suffisamment légers ou en actionnant des vérins articulés entre eux et un point fixe du mât dans le cas contraire. Dans le premier cas, un opérateur au moins doit maintenir le capot soulevé pendant qu'un autre installe la bielle qui les maintient dans cet état d'ouverture ; un seul opérateur est nécessaire si le capot est soulevé par un vérin, car il place la bielle de sécurité après avoir commandé le déploiement du vérin.

Certains moteurs d'avion présentent la situation particulière de deux capots adjacents dont l'un est suffisamment léger pour être soulevé à la main mais l'autre nécessite l'emploi d'un vérin de levage. Plusieurs opérateurs sont utilisés pour soulever le premier capot et installer la bielle comme ci-dessus puis pour commander le vérin du second capot et installer sa bielle.

Cette conception cumule les inconvénients des deux conceptions simples puisqu'on emploie plusieurs opérateurs pour ouvrir les capots et un vérin pour ouvrir l'un d'entre eux. On pourrait être tenté de pourvoir chacun des capots d'un vérin pour n'avoir à employer qu'un opérateur, mais la construction de la nacelle serait compliquée et enchérie par l'addition d'un second vérin.

L'invention représente une meilleure solution à ce problème d'emploi de plusieurs opérateurs pour ouvrir successivement deux capots d'une nacelle de moteur d'avion. Pour résumer, elle consiste en une nouvelle construction de la nacelle dans laquelle un même vérin est successivement relié aux deux capots pour les soulever.

La nacelle de moteur d'avion comprend deux capots adjacents présentant chacun un bord supérieur articulé sur le mât et un vérin d'ouverture d'un premier des capots, articulé à un point fixe du moteur et relié au premier capot par une première charnière (pouvant prendre, comme la suivante, divers aspects tels que celui d'une chape), et cette nacelle est originale en ce que la première charnière est séparable et comprend un élément de charnière appartenant au vérin, et le second des capots comprend un élément de charnière pouvant former une seconde charnière séparable avec l'élément de charnière appartenant au vérin, la seconde charnière pouvant être formée dans un état de rétraction du vérin et de fermeture du second capot et dans un état d'extension du vérin et d'ouverture du second capot. Ainsi, l'invention peut être définie sous sa forme la plus générale comme une nacelle de moteur d'avion comprenant deux capots adjacents, particuliers en ce qu'un premier des capots recouvre partiellement un des second capots, imposant un ordre d'ouverture et de fermeture, les capots présentant chacun un bord articulé à un mât de suspension de la nacelle ou à un élément fixe solidaire du mât et du moteur, et un vérin d'ouverture relié au premier capot dans une position où le premier capot est fermé par une première charnière et articulé par une autre charnière sur le moteur, caractérisée en ce que, par rotation autour de l'autre charnière, le vérin peut être successivement connecté au premier capot ou au deuxième capot sans être déconnecté de l'autre charnière et sans déconnecter son système d'alimentation ou de pilotage, et en ce que la mise en service est pilotée par un élément de commande masqué par le capot et proche d'un bord d'ouverture opposé au bord articulé du premier capot, lorsque ce capot est en position verrouillée.

Si le vérin est hydraulique, la nacelle peut comprendre un système de commande du vérin composé essentiellement d'une pompe, d'un réservoir de liquide et d'une vanne autorisant un passage de liquide du réservoir au vérin par la pompe et un passage de liquide direct du vérin au réservoir.

Si le vérin est à commande électrique, il peut être commandé par un interrupteur situé derrière le bord d'ouverture du premier capot.

Ces détails de l'invention ainsi que d'autres seront mieux compris à l'exposé des figures suivantes qui en représentent une réalisation particulière dans son contexte technique :
- la figure 1 est une vue en éclaté d'une nacelle de moteur d'avion ;
- la figure 2 illustre l'ouverture d'un capot par un vérin ;
- la figure 3 illustre la phase finale d'une ouverture manuelle de capot ;
- la figure 4 représente l'invention à l'état de fermeture des capots ;
- la figure 5 illustre le vérin de l'invention ;
- la figure 6 illustre une première phase de l'ouverture du premier capot ;
- la figure 7 illustre l'état de plus grande extension du vérin ;
- la figure 8, correspondant à la figure 3, illustre la phase finale de l'ouverture du premier capot avec l'invention ;
- la figure 9 illustre un changement de raccordement du vérin pour ouvrir le second capot ;
- la figure 10 illustre l'ouverture du second capot avec l'invention ;
- la figure 11 représente la disposition du vérin à la jonction des capots selon une vue en coupe longitudinale de la nacelle ;
- la figure 12 représente le détail de construction des charnières entre vérin et capots ;
- la figure 13 détaille les organes de commande des vérins ;
- les figures 14, 15 et 16 illustrent des étapes d'ouverture des capots, correspondant aux figures 4, 8 et 10 pour une deuxième réalisation de l'invention ;
- les figures 17 et 18 correspondent aux figures 12 et 11 pour une troisième réalisation de l'invention ;
- les figures 19 et 20 correspondent aux figures 12 et 11 pour une quatrième réalisation de l'invention ;
- les figures 21 et 22 correspondent aux figures 12 et 11 pour une cinquième réalisation de l'invention ;
- la figure 23 est une vue d'un vérin analogue à la figure 5 pour la deuxième réalisation de l'invention ;
- et les figures 24 et 25 correspondent aux figures 12 et 11 pour une sixième réalisation de l'invention.

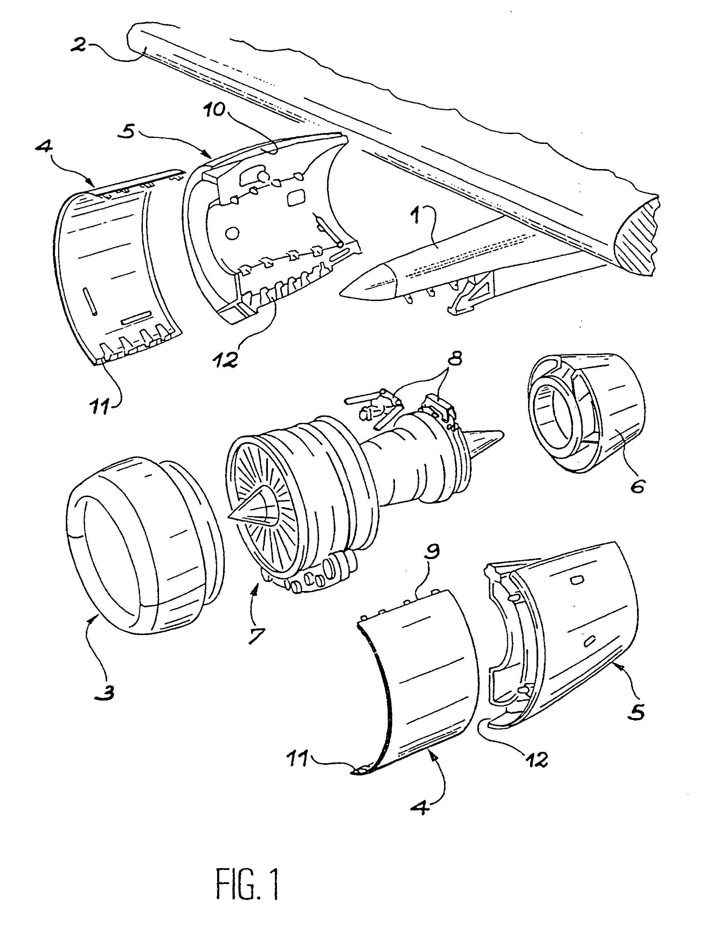

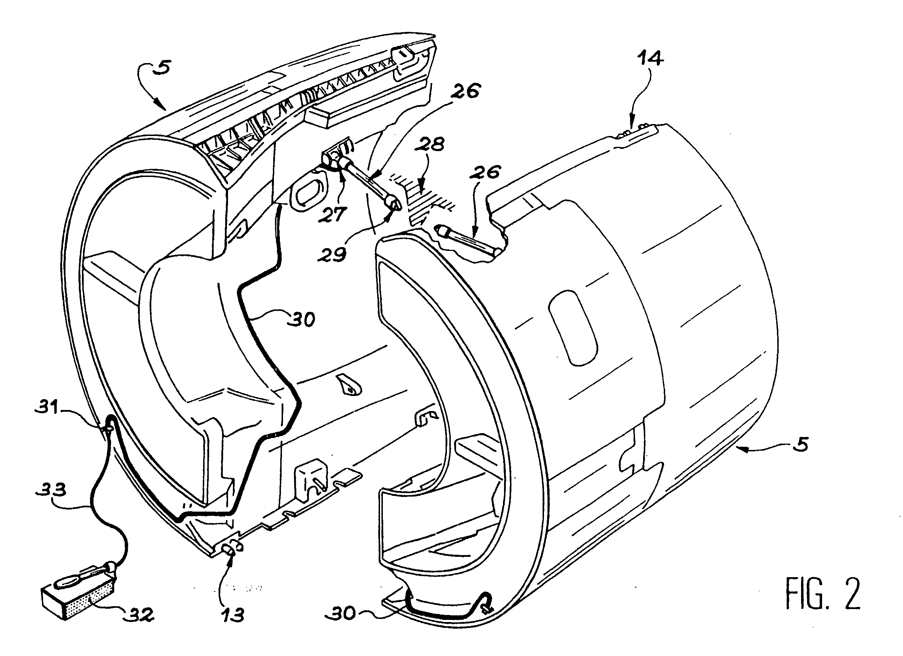

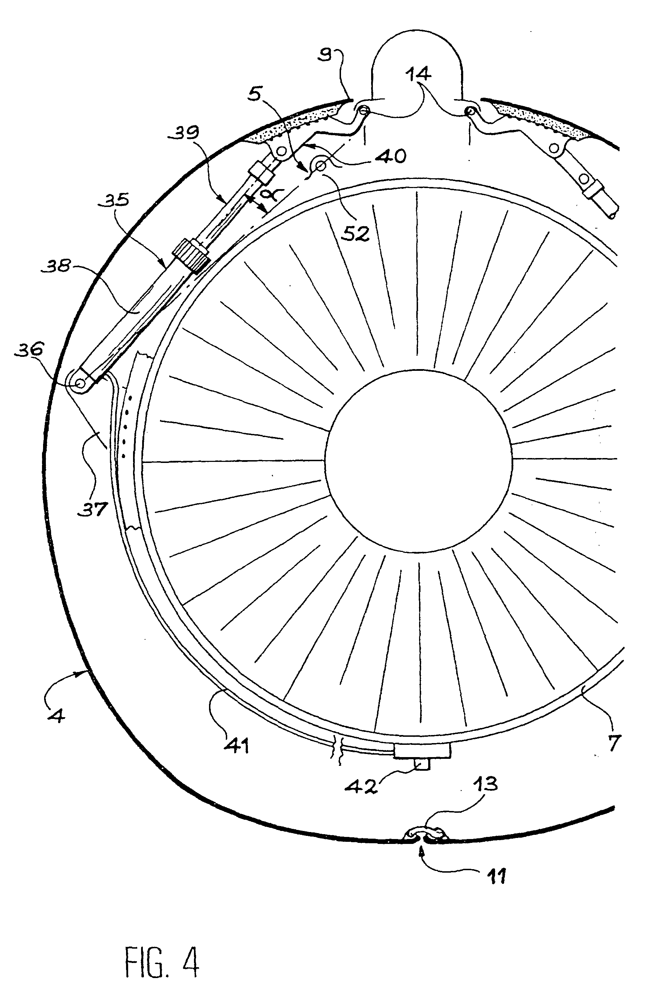

La figure 1 représente une nacelle existante pour un moteur d'avion. Cette enveloppe est suspendue à un mât 1 d'une aile d'avion 2 qui n'est qu'esquissée et elle se compose d'avant en arrière d'une entrée d'air 3, d'une paire de capots de soufflante 4 à gauche et à droite, d'une paire de capots d'inverseur de poussée 5, encore à gauche et à droite, et d'une tuyère 6 annulaire. Le moteur 7 englobé dans la nacelle est suspendu au mât 1 par deux organes de montage 8 à l'avant et l'arrière. Les capots de soufflante 4 et d'inverseur de poussée 5 sont en forme d'arc de cercle et sont articulés par leurs bords supérieurs, respectivement 9 et 10, au mât 1, et leurs bords inférieurs 11 et 12 portent des moyens de verrouillage qui permettent d'assembler les capots de soufflante 4 entre eux et les capots d'inverseur de poussée 5 entre eux. Ces moyens de verrouillage sont représentés schématiquement aux figures 2 et 4 sous la référence 13. Ils ne sont pas décrits en détail car l'invention ne porte pas sur eux et ils ne sont pas modifiés, pas plus que les charnières 14 d'articulation au mât 1.

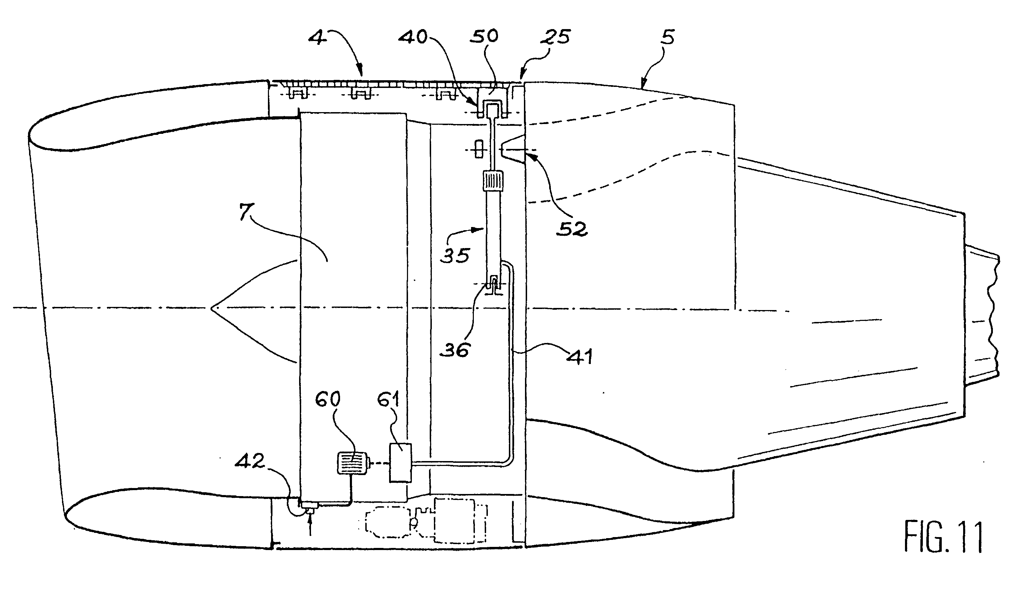

Les capots de soufflante 4 et d'inverseur de poussée 5 sont adjacents et le capot de soufflante 4 recouvre légèrement le capot inverseur 5 (à la bordure 25, visible à la figure 11).

Dans un procédé classique, les capots de soufflante 4 sont soulevés à la main, mais les capots d'inverseur de poussée 5 plus lourds sont munis du dispositif de levage illustré à la figure 2. Il s'agit de vérins 26 associés à chacun des capots 5 de la paire, articulés par une première extrémité aux capots 5 par une charnière 27 et par une extrémité opposée à des pattes d'attache 28 formant des points fixes du mât par une seconde charnière 29. Les vérins 26 sont des vérins hydrauliques alimentés par des conduits 30 courant le long des capots, vers le bas et vers l'avant de l'inverseur jusqu'à une prise 31 située sur la bordure frontalière 25 et qui est donc découverte quand les capots de soufflante 4 sont ouverts. Une pompe manuelle 32 terminée par un tuyau de raccordement 33 peut être branchée à la prise 31 pour emplir progressivement le conduit 30 et déployer le vérin 26.

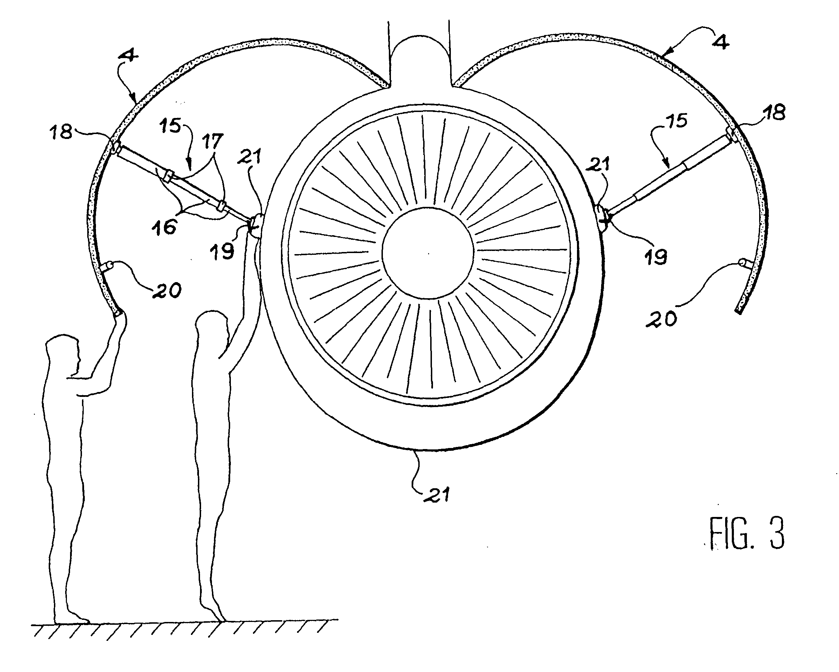

Des bielles sont employées pour maintenir les capots ouverts. La figure 3 représente les bielles 15 affectées au capot de soufflante 4 : elles sont composées d'un certain nombre de tronçons 16, trois par exemple, susceptibles de coulisser les uns dans les autres et reliés par des mécanismes de verrouillage 17 permettant de les retenir en position de déploiement. Les bielles 15 possèdent une extrémité supérieure 18 articulée aux capots de soufflante 4 à mi-hauteur de ceux-ci et une extrémité inférieure 19 façonnée en pince et retenue au départ dans une poignée 20 du capot de soufflante 4. On a représenté ici une étape finale d'ouverture des capots de soufflante 4, où un opérateur installe la pince 19 sur une poignée 21 du moteur 7 après l'avoir détachée de la poignée 20 et après avoir déployé les tronçons 16 et les avoir verrouillés. Un autre opérateur maintient le capot 4 soulevé.

Des bielles analogues sont prévues pour maintenir ouverts les capots d'inverseur de poussée 5 et se prémunir contre une défaillance des vérins 26.

Les vérins 26 de la construction connue étaient situés au milieu des capots 5 d'inverseur de poussée. Ils sont remplacés, pour l'invention, par des vérins 35 légèrement différents et situés à la bordure frontalière 25 de chaque côté de la nacelle pour servir successivement aux capots 4 et 5 respectifs. On voit à la figure 4 que les vérins 35 sont reliés par une articulation 36 à une patte d'attache 37 fixée sur le carter du moteur 7 ou éventuellement un autre point fixe de la nacelle ; le vérin 35 comporte comme de coutume un cylindre 38, auquel l'articulation 36 est attachée, et une tige 39, articulée au capot de soufflante 4 par une charnière 40. Les vérins 35 sont des vérins hydrauliques comme les précédents 26 et ils sont alimentés en liquide hydraulique par un tuyau 41 qui s'étend du cylindre 38 à une installation d'alimentation hydroélectrique comprenant un interrupteur 42 de commande. On a enfin représenté un fragment du capot d'inverseur de poussée 5, à savoir une chape 52 qui sera décrite plus loin et se trouve près de la charnière 40 sous le capot de soufflante 4 et à faible distance angulaire α du vérin 35 mobile autour de l'articulation 36.

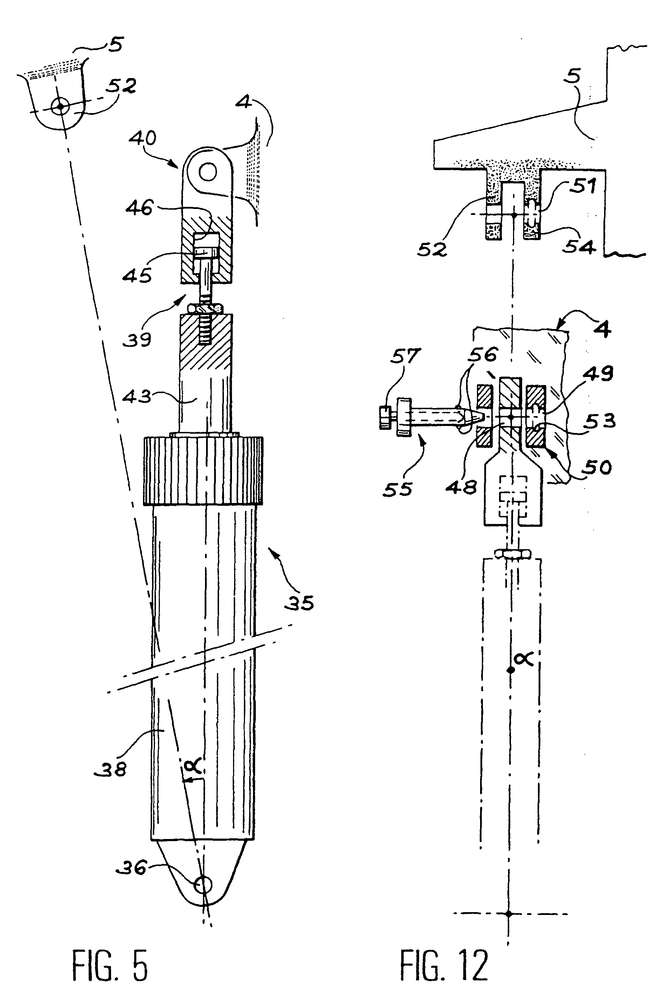

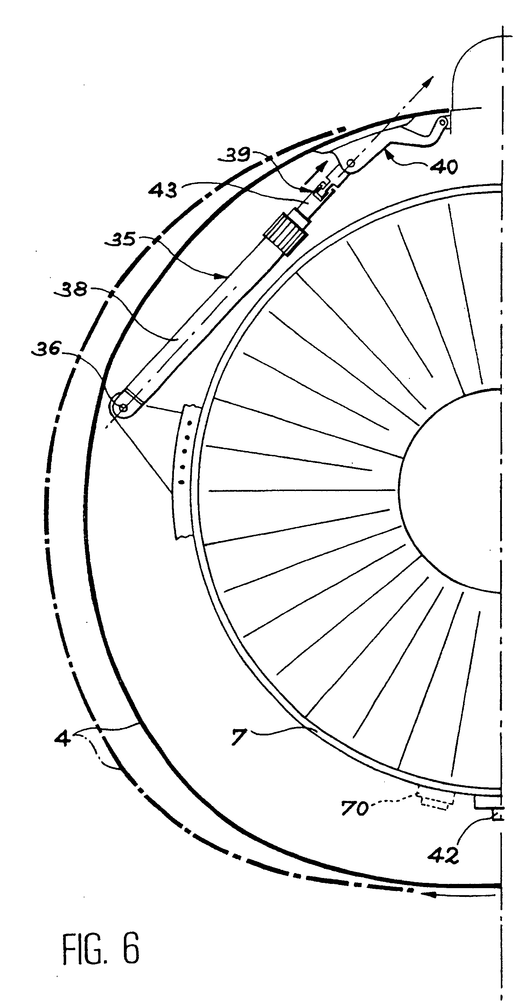

Avant l'ouverture des capots de soufflante, l'interrupteur 42 est volontairement masqué par lesdits capots. Le procédé d'ouverture consiste à déverrouiller les capots de soufflante 4 et à les ouvrir légèrement pour exposer l'interrupteur 42 ou un raccord rapide 70 sur lequel on reviendra ensuite ; cet état est représenté en pointillés à la figure 6. Cette ouverture préliminaire des capots de soufflante 4 peut être produite en les déformant ou, de préférence, en construisant la tige 39 de chacun des vérins 35 de la façon indiquée à la figure 5, c'est-à-dire en deux segments 43 et 44 en prolongement dont le premier est engagé dans le cylindre 38 et le second porte la charnière 40. Ces segments 43 et 44 sont reliés par un piston 45 de l'un, retenu dans un logement 46 fermé de l'autre où il coulisse, ce qui permet aux segments 43 et 44 de jouer en direction axiale dans une faible course. Si une telle disposition est retenue, le capot de soufflante 4 peut s'ouvrir sans effort en approchant les segments 43 et 44 de la tige 39 l'un de l'autre.

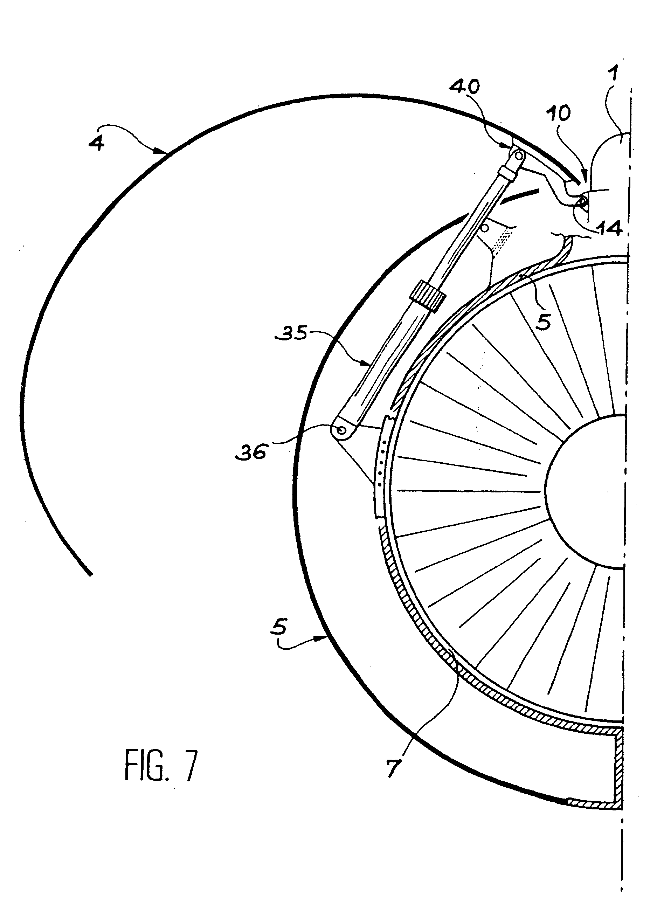

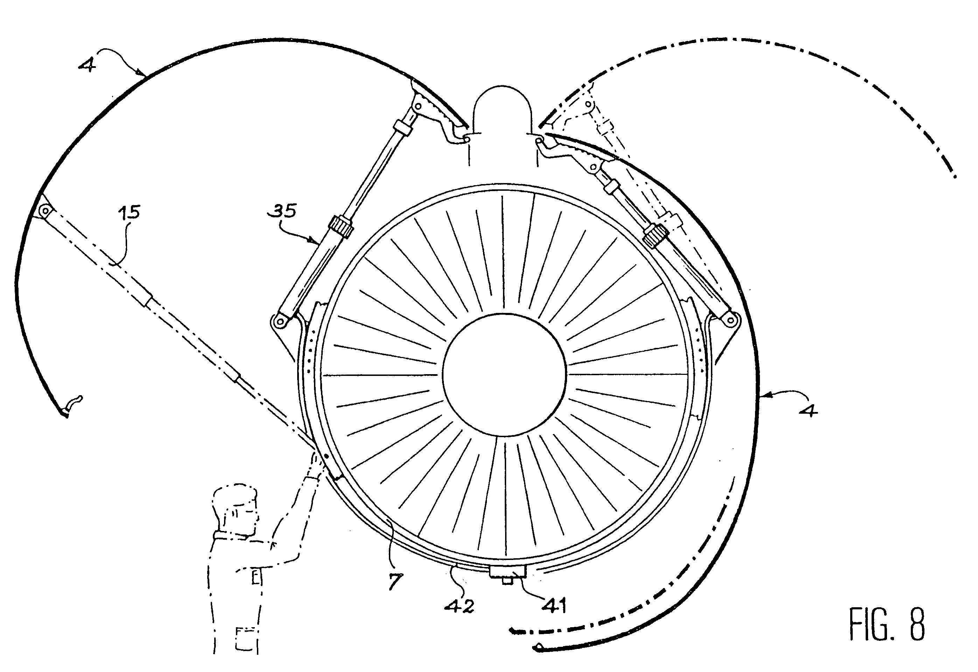

L'opérateur appuie alors sur l'interrupteur 42 pour commander le déploiement des vérins 35 jusqu'à ce que les capots de soufflante 4 soient complètement ouverts et soulevés, après quoi il installe les bielles 15 de la façon indiquée à la figure 3. L'autre opérateur de cette figure, qui tenait le capot de soufflante 4, devient inutile grâce au vérin 35. Ces manoeuvres et l'état correspondant du vérin 35 sont illustrés aux figures 7 et 8.

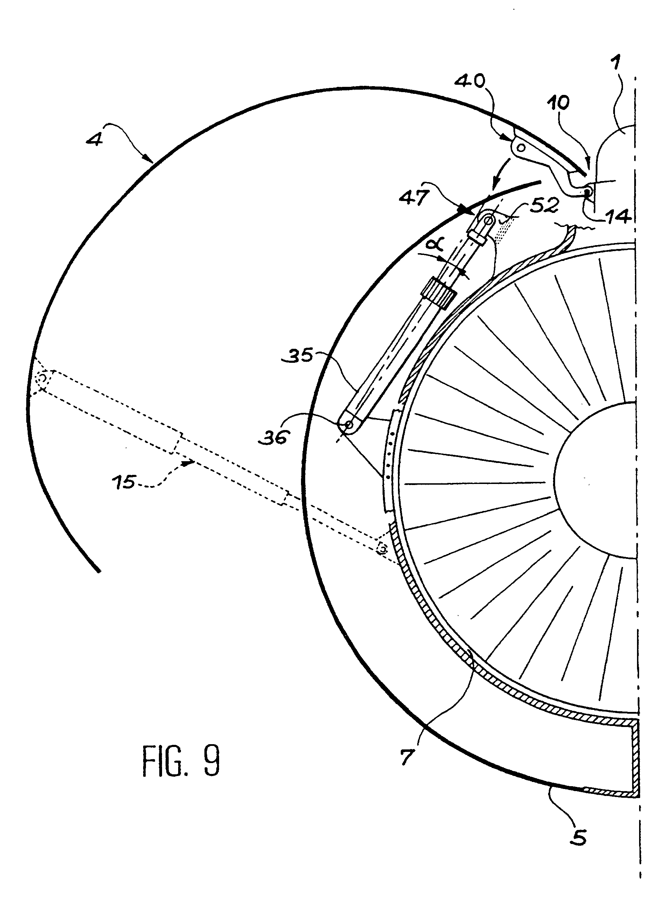

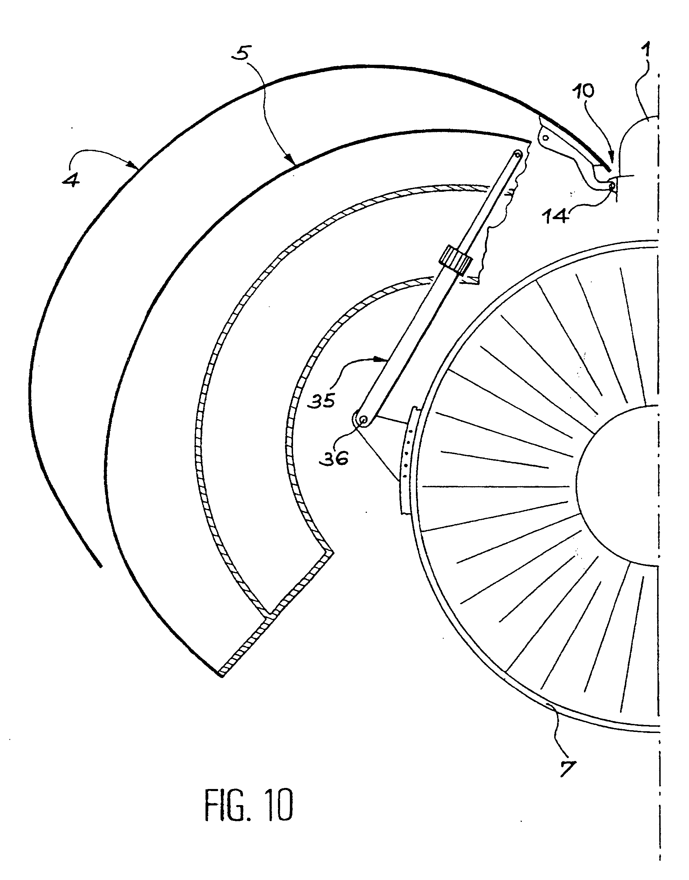

On s'intéresse ensuite à l'ouverture des capots d'inverseur de poussée 5. La figure 9 montre que les mêmes vérins 35 sont employés pour cela : la tige 39 est reliée par une seconde charnière 47 au capot d'inverseur de poussée 5, alors que la première charnière 40 qui l'unissait au capot de soufflante 4 est disjointe. Le vérin 35 est rétracté pour qu'on puisse former la seconde charnière 47 alors que le capot d'inverseur de poussée 5 est fermé, puis on alimente de nouveau le vérin 35 pour le déployer et soulever le capot d'inverseur de poussée 5 (ce que représente la figure 10) avant d'installer la bielle qui le maintient en position d'ouverture et qui, n'étant pas modifiée avec l'invention, n'est pas représentée ; elle est analogue à la bielle 15 et relie le capot d'inverseur de poussée 5 au mât 1.

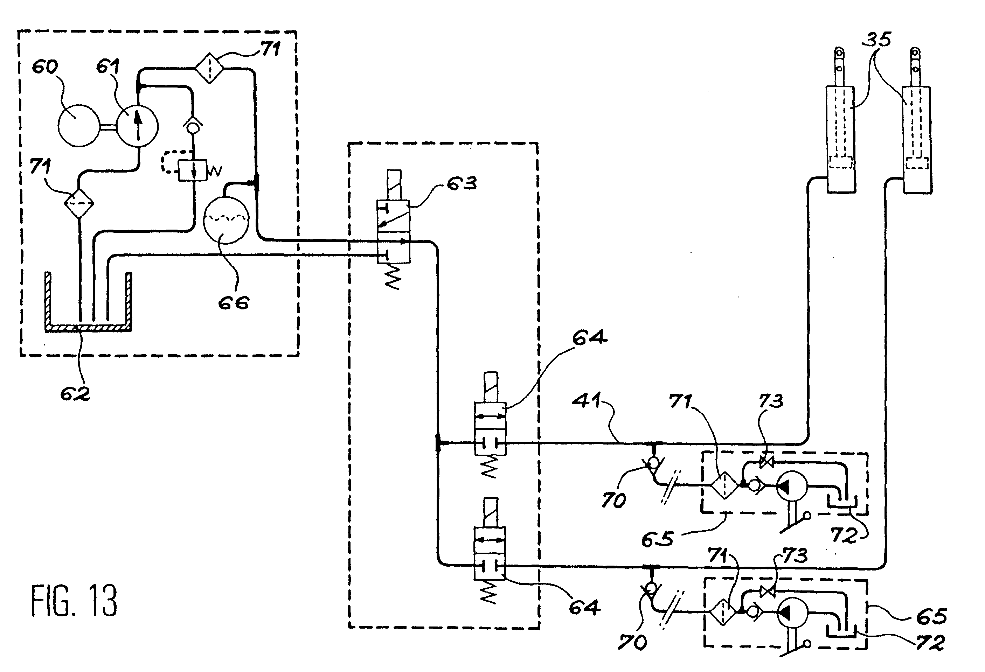

La figure 11 montre que le vérin 35 est situé sensiblement sous la bordure frontalière 25 des capots 4 et 5. Il est patent que les charnières 40 et 47, disjointes tour à tour, doivent être formées d'éléments amovibles. Dans une construction particulière visible à la figure 12, ces éléments peuvent comprendre une douille 48 sur la tige 39, une douille 49 sur une chape 50 du capot de soufflante 4 et une dernière douille 51 sur une chape d'attache 52 du capot d'inverseur de poussée 5. Ces deux dernières douilles sont pourvues de gorges 53 et 54. De plus, les charnières sont complétées par un axe d'articulation 55 amovible muni d'un cercle de billes 56 à son extrémité ; une clé 57 disposée au milieu de l'axe d'articulation 55 peut être tournée ou appuyée pour faire sortir des billes 56 partiellement de logements de l'axe d'articulation 55 où elles sont retenues ou au contraire pour les laisser rentrer dans ces logements. La première charnière 40 est constituée quand l'axe d'articulation 55 est enfilé à la fois dans les douilles 48 et 49 et que la clé est tournée pour faire saillir les billes 56 dans la gorge 53, ce qui interdit la disjonction accidentelle de cette charnière 40 ; la seconde charnière 47 est établie de manière similaire en enfilant l'axe d'articulation 55 dans les douilles 48 et 51 et en faisant saillir les billes 56 dans la gorge 54.

Un système de commande des vérins 35 est complètement représenté à la figure 13 et comprend un moteur électrique 60, une pompe hydraulique 61, un réservoir d'huile 62, une vanne d'alimentation 63 des vérins 35 qui présente cependant un état autorisant le retour de l'huile vers le réservoir 62 et, pour chacun des vérins 35, une vanne d'ouverture 64. L'interrupteur 42, qui n'est pas représenté à la figure 13, commande à la fois la marche du moteur 60 et l'ouverture des vannes 63 et 64 pour commander le déploiement des vérins 35. Il possède toutefois un état supplémentaire où il inverse la commutation de la vanne d'alimentation 63 pour rétracter les vérins 35, et un second état supplémentaire où les vannes d'ouverture 64 sont refermées pour maintenir les vérins 35 à l'état atteint en les isolant du système de commande. L'utilisation d'un réservoir pressurisé ou d'un accumulateur permettrait de produire les forces d'ouverture des vérins 35 malgré une avarie du moteur électrique 60 ou de la pompe 61, en ouvrant simplement les vannes 63 et 64.

En variante, une pompe manuelle 65 pourrait être ajoutée. Elle serait raccordée aux conduits 41 par une prise analogue à la prise 31 et suppléerait la pompe 61 motorisée en cas de besoin.

Cette pompe autonome en capacité d'huile est celle qui est classiquement utilisée aujourd'hui pour l'ouverture du capot d'inverseur de poussée 5. Elle est connectée à un raccord rapide 70, solidaire du moteur, automatiquement fermé lorsqu'il est déconnecté et automatiquement ouvert lorsqu'il est connecté à la pompe manuelle 65. Par action sur cette pompe manuelle autonome, un opérateur peut ouvrir séquentiellement les capots de soufflante 4 puis les capots d'inverseur de poussée 5 suivant un procédé identique à celui de l'électro-pompe 61 mais sans utilisation de l'ensemble de commande et de puissance hydroélectrique, les vannes 64 étant maintenues fermées. La fermeture des capots 4 et 5, qui implique une vidange des vérins 35, s'obtient en ouvrant un robinet 73 situé sur la pompe manuelle renvoyant l'huile vers le réservoir 72 de la pompe manuelle 65. Dans toutes ces réalisations, des filtres 71 sont prévus sur les canalisations d'huile entre les réservoirs 62 ou 72 et les vérins 35, en amont ou en aval des pompes.

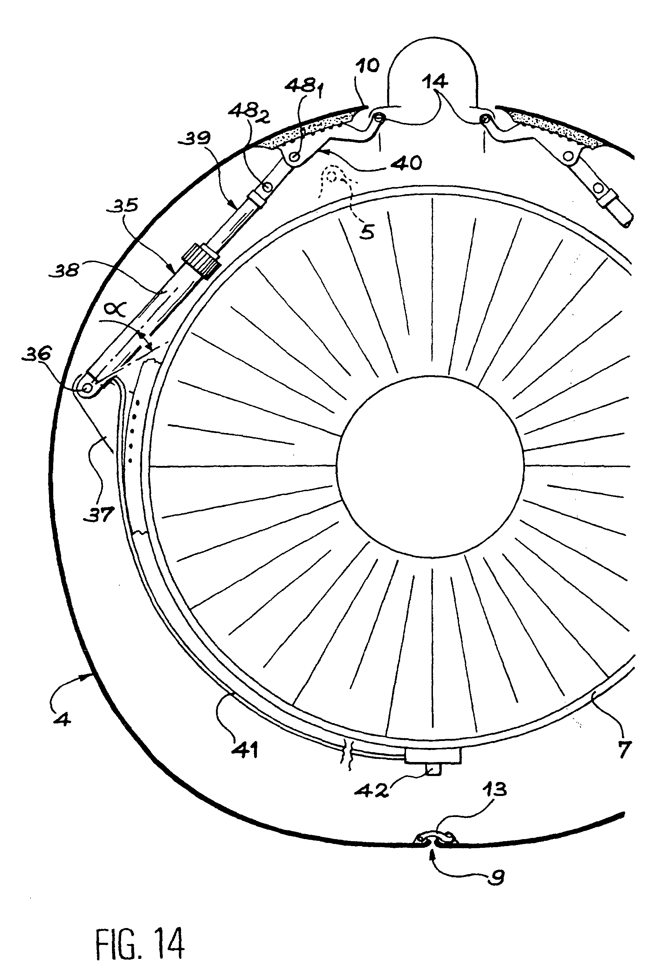

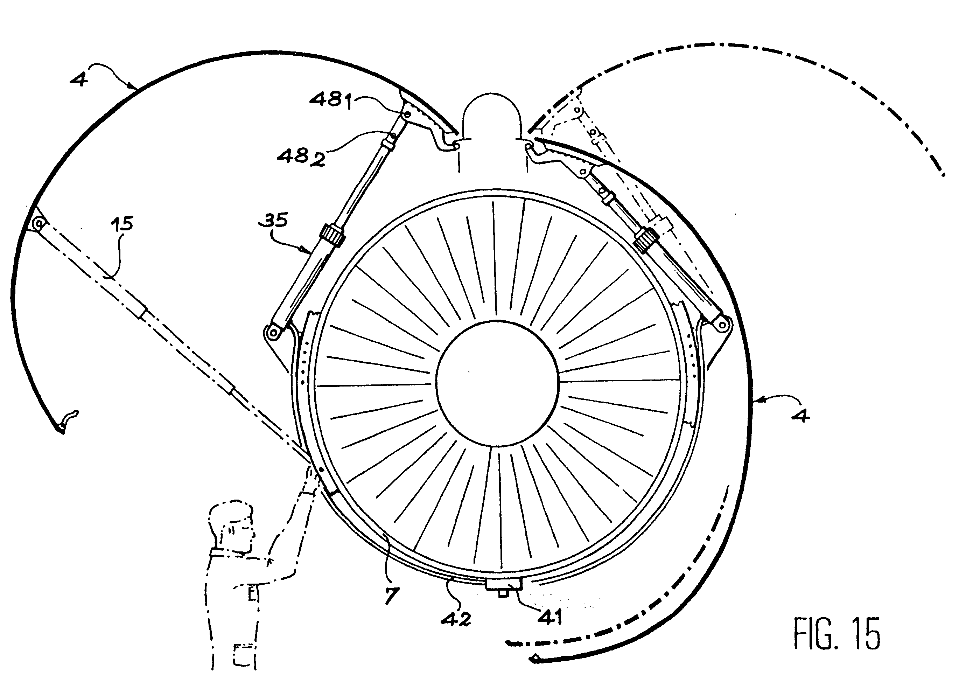

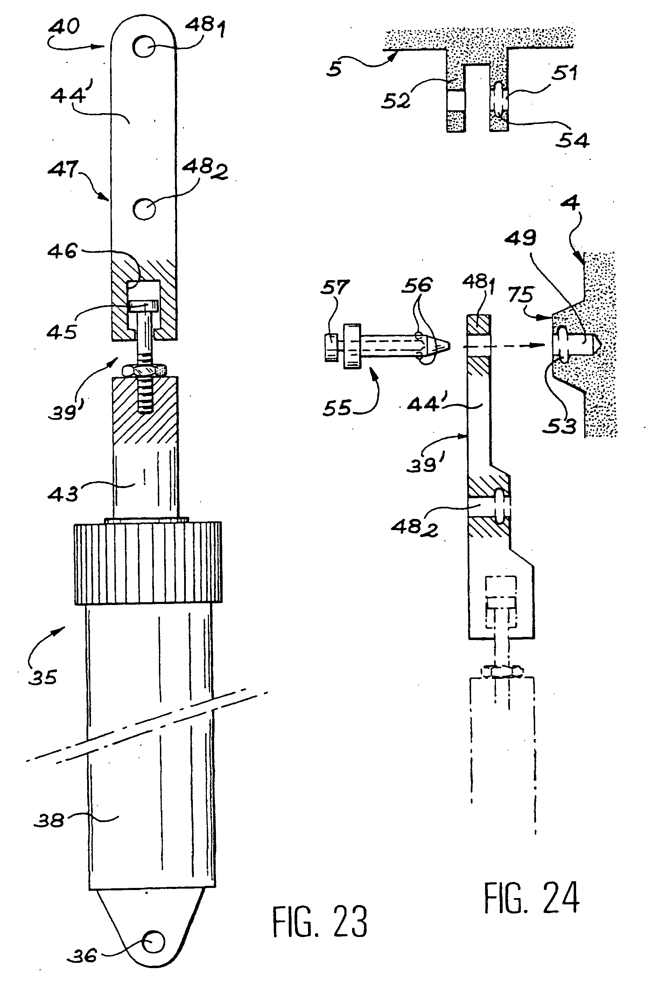

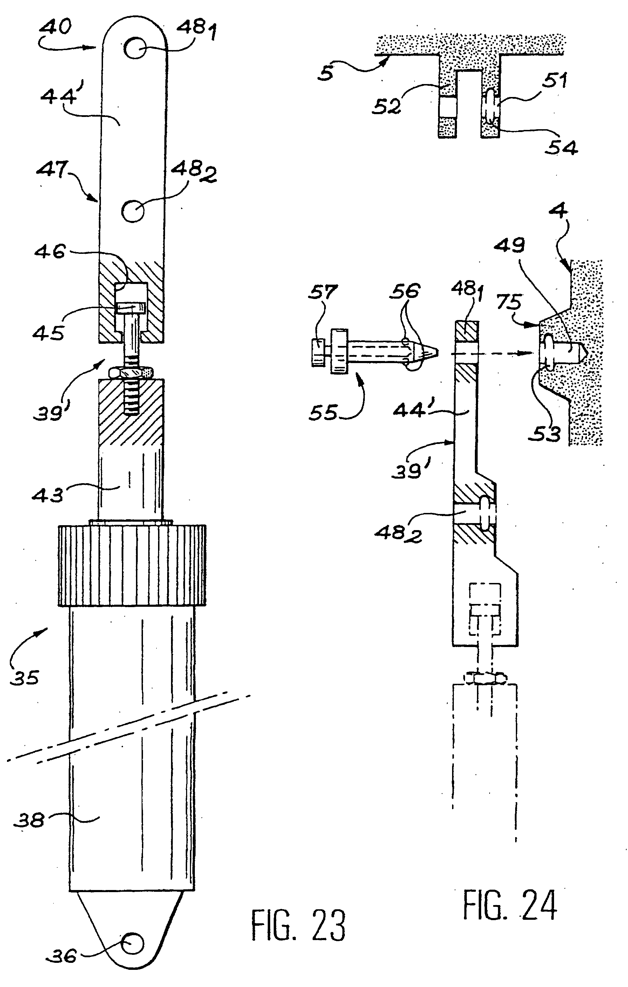

D'autres formes de réalisation sont exposées dans les figures suivantes : la tige 39 du vérin 35 peut ainsi être remplacée par une tige 39' plus longue, dont le segment distal, ici 44', porte deux douilles 48₁ et 48₂ échelonnées sur sa longueur au lieu d'une seule comme dans la réalisation exposée jusqu'ici. Ce vérin est représenté à la figure 23. Les étapes d'ouverture des capots 4 et 5 sont illustrées sur les figures 14, 15 et 16 qui correspondent respectivement aux figures 4, 8 et 10 de la réalisation précédente ; la différence entre les deux procédés consiste en ce que la première charnière 40 est constituée avec la douille 48₁ la plus éloignée de l'articulation 36, alors que la seconde charnière 47 est constituée avec l'autre des douilles 48₂ : la seconde charnière 47 est donc plus éloignée du bord supérieur 10 du capot d'inverseur de poussée 5, articulé au mât 1, que la première charnière 40 ne l'était du bord supérieur 9 du capot de soufflante 4. Cette situation géométrique permet au vérin 35 de soulever plus facilement le capot d'inverseur de poussée 5, plus lourd que le précédent, grâce au bras de levier plus important.

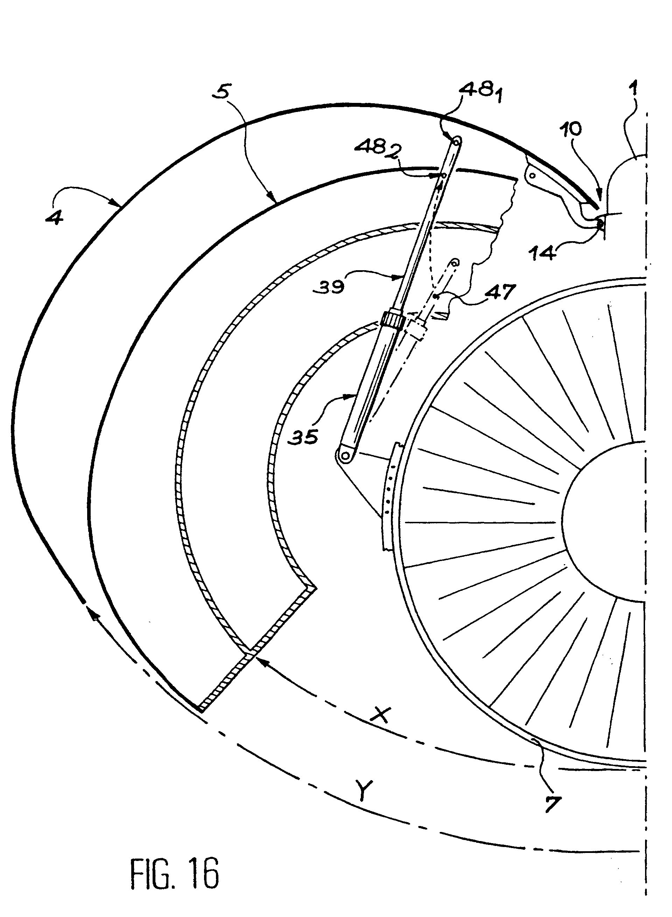

Si cet avantage n'est pas recherché, le perçage de plusieurs douilles parallèles le long de la tige 39 ou 39' du vérin 35 permet tout de même, en choisissant les douilles de la tige avec laquelle les charnières 40 et 47 sont constituées, de régler l'angle d'ouverture (X ou Y sur la figure 16) des capots 4 et 5.

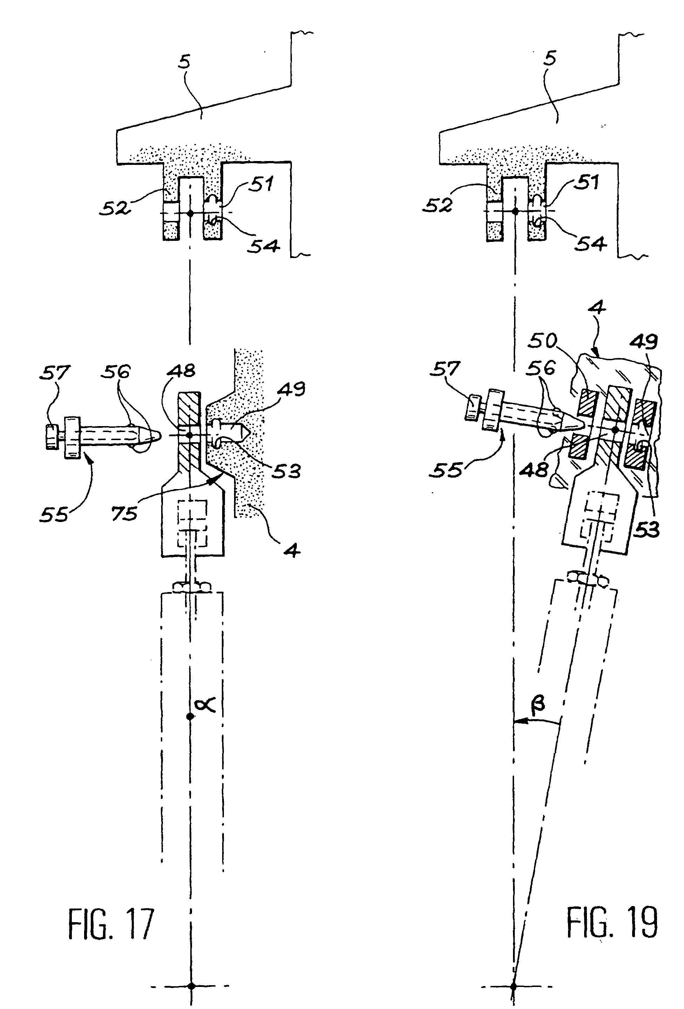

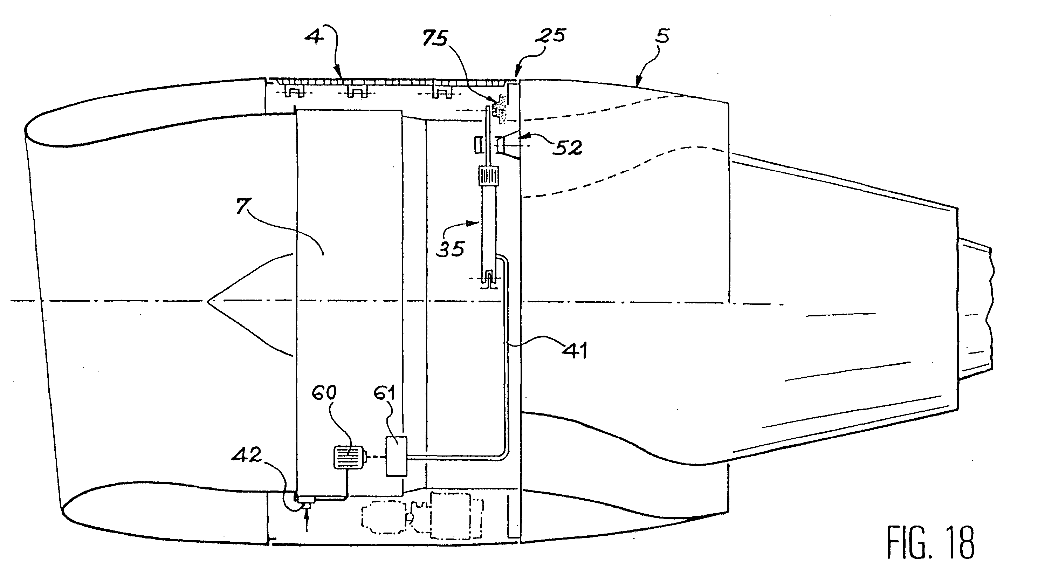

Une autre modification possible consiste à remplacer les chapes à deux ailes de support des capots, par exemple celle (50) du capot de soufflante 4, par un pivot simple où la douille 49 de la charnière 40 est entièrement creusée dans un bossage 75 unique. Les figures 17 et 18 la représentent. Ici encore, le raccordement du vérin 35 à l'un ou l'autre des capots 4 et 5 est consécutif à une rotation du vérin 35 dans un plan vertical autour de l'articulation 36.

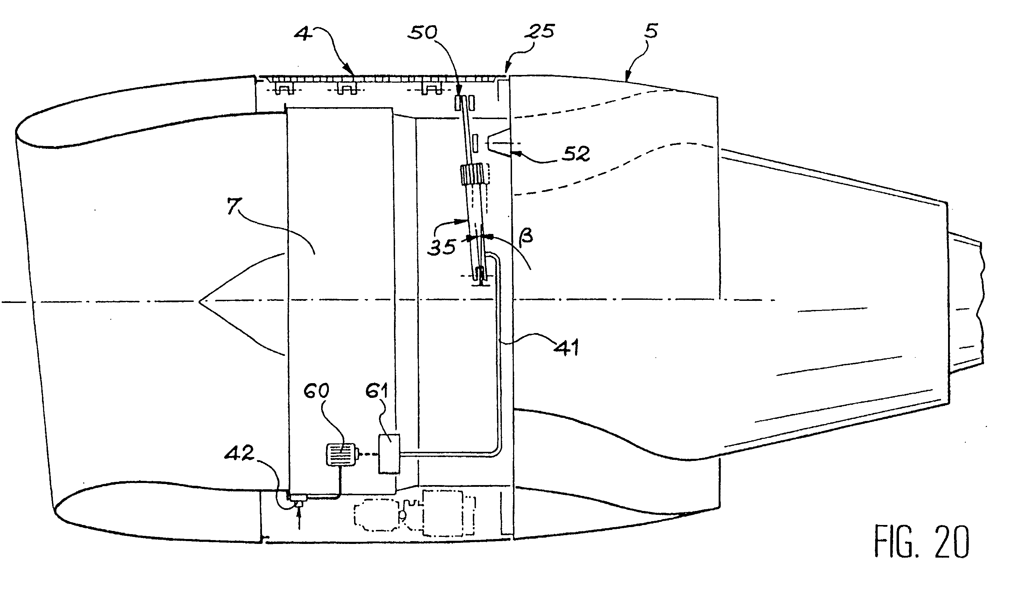

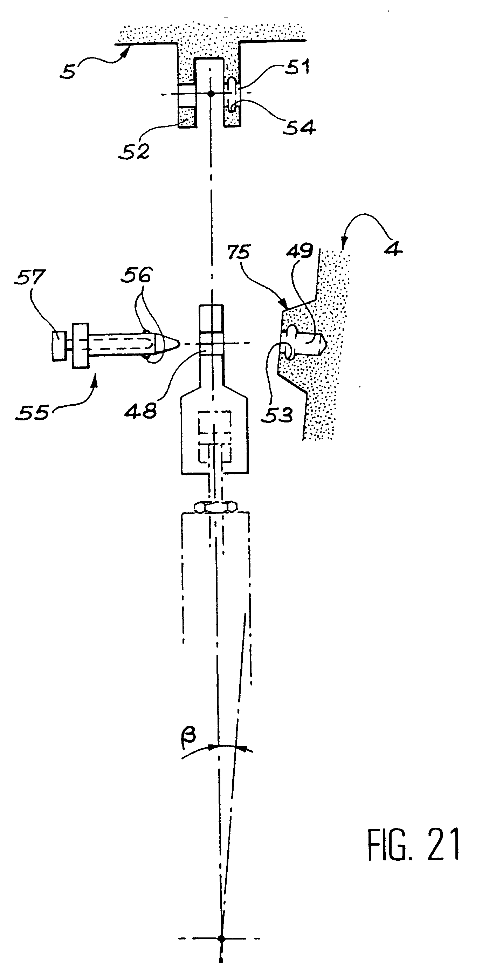

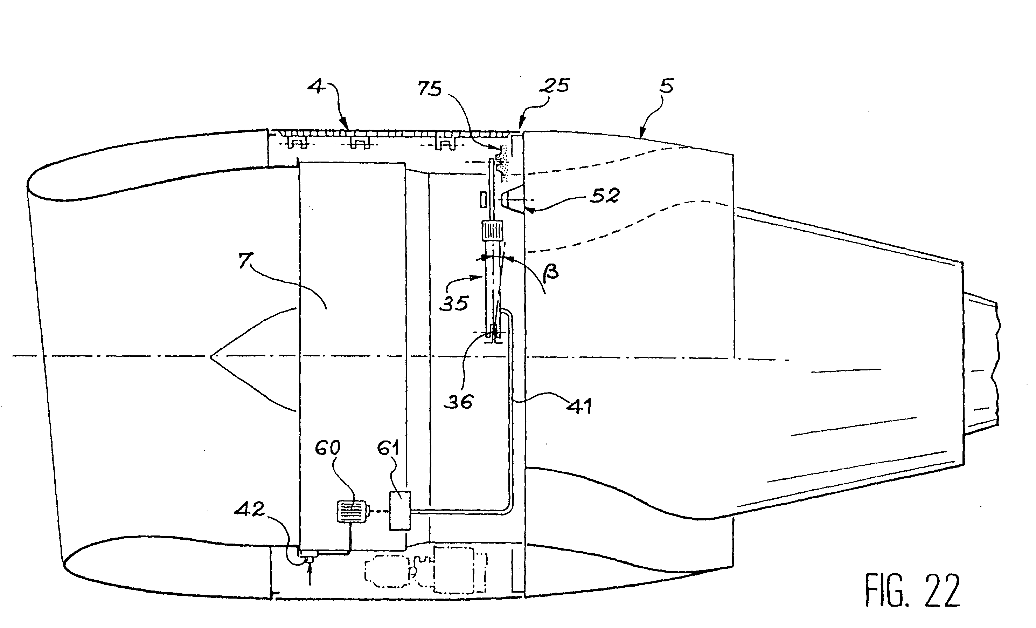

Mais des mouvements plus compliqués peuvent être imposés au vérin 35 : les figures 19 et 20 montrent que les charnières 40 et 47 peuvent être décalées en direction longitudinale de l'avion, ce qui impose une rotation supplémentaire β dans un plan horizontal du vérin 35 pour passer de l'une à l'autre. Les chapes peuvent être encore remplacées par des bossages, ce qui signifie qu'on peut cumuler les deux modifications précédentes, ce qu'on représente aux figures 21 et 22.

Toutes les autres combinaisons de ces variantes, et d'autres qui seraient à la portée de l'homme de l'art, entrent dans la définition de l'invention ; l'une d'entre elles, où le vérin à deux douilles 48₁ et 48₂ de la figure 23 est employé dans la réalisation des figures 21 et 22, est illustrée aux figures 24 et 25.

## Revendications

1. Nacelle de moteur d'avion comprenant deux capots (4 et 5) adjacents, particuliers en ce qu'un premier des capots (4) recouvre partiellement un second des capots (5), imposant un ordre d'ouverture et de fermeture, les capots présentant chacun un bord (9, 10) articulé à un mât (1) de suspension de la nacelle ou à un élément fixe solidaire du mât (1) et du moteur (7), et un vérin d'ouverture (35) relié au premier capot (4), dans une position où le premier capot (4) est fermé, par une première charnière (40) et articulé par une autre charnière (36) sur le moteur (7), **caractérisée en ce que**, par rotation autour de l'autre charnière (36), le vérin peut être successivement connecté au premier capot (4) ou au deuxième capot (5) sans être déconnecté de l'autre charnière (36) et sans déconnecter son système d'alimentation ou de pilotage, et **en ce que** la mise en service du vérin (35) est pilotée par un élément de commande masqué par le capot (4) et proche d'un bord d'ouverture opposé au bord articulé du premier capot, lorsque ce capot (4) est en position verrouillée.

2. Nacelle de moteur d'avion selon la revendication 1, **caractérisée en ce que** l'élément de commande (42) est rendu accessible par flexion du premier capot (4) ou par une course libre obtenue par le fait que le vérin (35) comprend une tige (39) formée en deux segments (43, 44) en prolongement et mutuellement mobiles axialement dans la limite d'un jeu.

3. Nacelle de moteur d'avion selon la revendication 1, **caractérisée en ce que** le vérin comprend une tige (39) munie de deux éléments de charnière (48₁, 48₂) échelonnés destinés à contribuer à former respectivement la première charnière (40) et une seconde charnière (47).

4. Nacelle de moteur d'avion selon la revendication 1, **caractérisée en ce qu'**elle comprend un système de commande du vérin (35) composé essentiellement d'une pompe (61), d'un réservoir de liquide (62) et d'une vanne (63) autorisant un passage de liquide du réservoir au vérin par la pompe et un passage de liquide direct du vérin au réservoir.

5. Nacelle de moteur d'avion selon la revendication 4, **caractérisée en ce que** le système de commande du vérin (35) comprend aussi un réservoir auxiliaire de liquide sous pression (66).

6. Nacelle de moteur d'avion selon la revendication 1, **caractérisée en ce que** le vérin (35) est un vérin électrique commandé par un interrupteur (42) constituant l'élément de commande.

7. Nacelle de moteur d'avion selon la revendication 1, **caractérisée en ce que** le vérin (35) peut tourner dans un plan autour de l'autre charnière (36).

8. Nacelle de moteur d'avion selon la revendication 1, **caractérisée en ce que** le vérin (35) peut tourner dans plusieurs plans, l'autre charnière (36) étant réalisée en rotule.

9. Nacelle de moteur d'avion selon la revendication 1, **caractérisée en ce que** les charnières (40, 47) de connexion du vérin aux capots (4, 5) comprennent des éléments de chape (49, 52) fixés aux capots.

10. Nacelle de moteur d'avion selon la revendication 1, **caractérisée en ce que** les charnières (40, 47) de connexion du vérin aux capots (4, 5) comprennent des pivots simples (75), établissant des connexions en porte-à-faux, fixés aux capots.

## Patentansprüche

1. Flugzeugantriebsgondel mit zwei aneinandergrenzenden Abdeckungen bzw. Hauben (4 und 5), die sich dadurch auszeichnen, dass eine erste der Abdeckungen (4) teilweise eine zweite der Abdeckungen (5) überdeckt und eine Reihenfolge der Öffnung und des Schließens auferlegt, wobei die Abdeckungen jeweils eine Kante (9,10) aufweisen, die mit einem Aufhängungsmast (1) der Gondel oder mit einem feststehenden, mit dem Mast (1) und dem Motor (7) einstückigen Element gelenkig verbunden ist, und einem Öffnungszylinder 35, der mit der ersten Abdeckung (4) in einer Position, in der die erste Abdeckung (4) geschlossen ist, durch ein erstes Gelenk (40) verbunden sind, und durch ein weiteres Gelenk (36) mit dem Motor (7) gelenkig verbunden ist, **dadurch gekennzeichnet, dass** durch Drehung um das andere Gelenk (36) der Zylinder nacheinander mit der ersten Abdeckung (4) oder der zweiten Abdeckung (5) verbunden werden kann, ohne mit dem anderen Gelenk (36) entkoppelt zu werden und ohne sein Versorgungsoder Steuersystem abzukoppeln, und
dass die Betätigung des Zylinders (35) durch ein von der Abdeckung (4) maskiertes Steuerelement gesteuert wird, das sich neben einer gegenüber der angelenkten Kante der ersten Abdeckung befindlichen Öffnungskante befindet, wenn sich diese Abdeckung (4) in verriegelter Position befindet.

2. Flugzeugantriebsgondel nach Anspruch 1, **dadurch gekennzeichnet, dass** das Steuerelement (42) durch Biegen der ersten Abdeckung (4) zugänglich gemacht wird, oder durch einen freien Hub, der dadurch erhalten wird, dass der Zylinder (35) eine Stange (39) aufweist, die aus zwei aufeinanderfolgenden Segmenten (43,44) gebildet ist, die gegenseitig axial innerhalb der Grenzen eines Spiels beweglich sind.

3. Flugzeugantriebsgondel nach Anspruch 1, **dadurch gekennzeichnet, dass** der Zylinder eine Stange (39) aufweist, die mit zwei abgestuften Gelenkelementen (48₁,48₂) versehen ist, die dazu vorgesehen sind, zur Bildung des ersten Gelenks (40) und eines zweiten Gelenks (47) beizutragen.

4. Flugzeugantriebsgondel nach Anspruch 1, **dadurch gekennzeichnet, dass** sie ein System zur Steuerung des Zylinders (35) umfasst, das im wesentlichen aus einer Pumpe (61), einem Flüssigkeitsreservoir (62) und einem Ventil (63) zusammengesetzt ist, welches einen Durchlauf von Flüssigkeit vom Reservoir zum Zylinder über die Pumpe und einen Durchlauf der Flüssigkeit direkt vom Zylinder zum Reservoir ermöglicht.

5. Flugzeugantriebsgondel nach Anspruch 4, **dadurch gekennzeichnet, dass** das System zur Steuerung des Zylinders (35) auch ein Hilfsreservoir von druckbeaufschlagter Flüssigkeit (66) umfasst.

6. Flugzeugantriebsgondel nach Anspruch 1, **dadurch gekennzeichnet, dass** der Zylinder (35) ein elektrischer Zylinder ist, der von einem das Steuerelement bildenden Schalter (42) gesteuert wird.

7. Flugzeugantriebsgondel nach Anspruch 1, **dadurch gekennzeichnet, dass** sich der Zylinder (35) in einer Ebene um das andere Gelenk (36) drehen kann.

8. Flugzeugantriebsgondel nach Anspruch 1, **dadurch gekennzeichnet, dass** sich der Zylinder (35) in mehreren Ebenen drehen kann, wobei das andere Gelenk (36) als Kugelgelenk ausgebildet ist.

9. Flugzeugantriebsgondel nach Anspruch 1, **dadurch gekennzeichnet, dass** die Gelenke (40,47) zur Verbindung des Zylinders mit den Abdeckungen (4,5) an den Abdeckungen befestigte Gabelgelenke (49,52) umfassen.

10. Flugzeugantriebsgondel nach Anspruch 1, **dadurch gekennzeichnet, dass** die Gelenke (40,47) zur Verbindung des Zylinders mit den Abdeckungen (4,5) einfache Drehgelenke (75) umfassen, die an den Abdeckungen befestigte Auskragungsverbindungen herstellen.

## Claims

1. An aircraft engine nacelle comprising two adjacent covers (4 and 5) which are special in that a first one of the covers (4) partially overlaps one of the second covers (5), imposing an order of opening and closing, the covers each having an edge (9, 10) articulated on a suspension mast (1) on the nacelle or on a fixed element secured to the mast (1) and engine (7), and an opening actuator (35) connected to the first cover (4) in a position where the first cover (4) is closed by a first hinge (40) and articulated by a second hinge (36) on the engine (7), **characterized in that**, by rotation about the other hinge (36), the actuator can be successively connected to the first cover (4) or to the second cover (5) without being disconnected from the other hinge (36) and without disconnecting its supply or control system, and **in that** bringing the actuator (35) into service is controlled by a control element concealed by the cover (4) and close to an opening edge opposite the articulated edge of the first cover, when this cover (4) is in the locked position.

2. An aircraft engine nacelle according to claim 1, **characterized in that** the control element (42) is made accessible by flexing the first cover (4) or by means of a free travel obtained by the fact that the actuator (35) comprises a stem (39) formed in two segments (43, 44) in line with each other and mutually movable axially within the limit of a play.

3. An aircraft engine nacelle according to claim 1, **characterized in that** the actuator comprises a stem (39) provided with two stepped hinge elements (48₁, 48₂) intended to help to form respectively the first hinge (40) and a second hinge (47).

4. An aircraft engine nacelle according to Claim 1, **characterised in that** it comprises a system of controlling the actuator (35) composed essentially of a pump (61), a liquid reservoir (62) and a valve (63) allowing passage of liquid from the reservoir to the actuator through the pump and a direct passage of liquid from the actuator to the reservoir.

5. An aircraft engine nacelle according to Claim 4, **characterised in that** the system controlling the actuator (35) also comprises an auxiliary pressurised liquid reservoir (66).

6. An aircraft engine nacelle according to Claim 1, **characterised in that** the actuator (35) is an electrical actuator controlled by a switch (42) constituting the control element.

7. An aircraft engine nacelle according to Claim 1, **characterised in that** the actuator (35) can rotate in a plane about the other hinge (36).

8. An aircraft engine nacelle according to Claim 1, **characterised in that** the actuator (35) can rotate in several planes, the other hinge (36) being produced as a swivel.

9. An aircraft engine nacelle according to Claim 1, **characterised in that** the hinges (40, 47) for connecting the actuator to the covers (4, 5) comprise fork elements (49, 52) fixed to the covers.

10. An aircraft engine nacelle according to Claim 1, **characterised in that** the hinges (40, 47) for connecting the actuator to the covers (4, 5) comprise simple pivots (75), establishing cantilever connections, fixed to the covers.
